# EUROPEAN PATENT APPLICATION

(11) **EP 0 996 309 A2**
(43) Date of publication of application: **26.04.2000**
(21) Application number: 99308338.5
(22) Date of filing: 21.10.1999
(51) Int. Cl.: H04Q 11/04, H04J 3/08

(54) **Ring network system and transmission apparatus**

(30) Priority: 22.10.1998 JP 30110498
(71) Applicant: KABUSHIKI KAISHA TOSHIBA, Kawasaki-shi, Kanagawa-ken 210-8572 (JP)
(72) Inventor: Suetsugu, Hiromune, I.P.D. K. K. Toshiba, Tokyo 105-8001 (JP)
(74) Representative: Shindler, Nigel

(57) **Abstract**

An MS-RDI receiving section (23) is arranged in each node. When an SF fault occurs in a service line (SL (4)) while the faults have occurred in a protection line (PL (1, 2)) of, e.g., a segment C, an SF fault occurrence notification is directly sent from a node C to a node D using an MS-RDI signal. An MS-RDI notifying section (22) transmits this MS-RDI signal via a remaining service line (SL (3)). An MS-RDI receiving section (23) of the node D receives the MS-RDI signal to detect occurrence of ring switching.

## Description

The present invention relates to a ring network system complying with, e.g., the SDH (Synchronous Digital Hierarchy) standard or SONET (Synchronous Optical Network), and transmission system used in this ring network system.

In recent demand for a wideband ISDN based on an internationally standardized user network interface, the standard for systematically multiplexing various high-speed services and existing low-speed services, that is, SDH (called SONET in the U.S.A.; SDH and SONET are identical standards in the stage of 155.52 Mb/s or more and can be interconnected. The SDH will be an objective in the following description) has been standardized. A technology pertaining to an international network in which SDH transmission apparatuses installed in various countries in the world are connected via large-capacity submarine cables has been extensively developed along with the SDH standard.

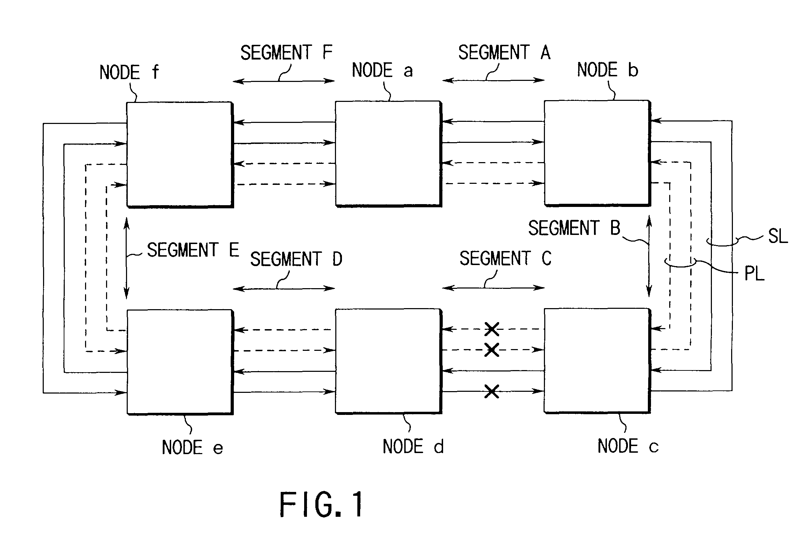

As shown in FIG. 1, in this international SDH network, a plurality of transmission apparatuses (nodes) a to f are ring-connected via duplex lines as a service line SL (solid lines) and protection line PL (dotted lines).

Each of the service and protection lines has clockwise (CW) and counterclockwise (CCW) lines. When a fault occurs, these lines are switched to remedy transmission signals.

The line switching sequence in the SDH transmission system upon occurrence of a fault is defined in ITU-T Recommendation G. 841 in detail. Upon occurrence of a fault, each node rewrites and exchanges K1 and K2 bytes (to be referred to as K bytes hereinafter) defined in the overhead of the SDH transmission frame in accordance with the above recommendation, thereby autonomously switching the lines.

The above recommendation defines K-byte exchange using the protection line. This exchange suffers a faulty state in which faults occur in both the CW and CCW lines of the protection line and a fault also occurs in the service line (CW or CCW) during a single segment in a 4-fiber ring network of FIG. 1.

In FIG. 1, assume that a fault occurs between the nodes c and d (segment C) due to the above pattern. In this case, the node c that has detected the fault cannot directly transmit a K-byte switching command to the node d via the service line SL (CW).

The node c transmits the K bytes to the node d using the protection line PL (CCW) of a counter-clockwise segment (i.e., node c → node b → node a → node f → node e → node d). Upon receiving the K bytes from the node c, the node d detects the occurrence of the fault. From this time point, switching control (so-called ring switching) involving all the nodes a to f is started.

According to the above switching scheme, a time is required to transmit the K bytes in the reverse section until switching control is executed upon occurrence of a fault. That is, a node adjacent to the faulty segment detects occurrence of a fault in an opposing node by using the K bytes transmitted via a segment outside the faulty segment. For this reason, a time is required for transmitting the K bytes one turn in the network except the faulty segment until the ring switching sequence is started in the node d in FIG. 1.

A time required from occurrence of a fault to the end of restoration (completion of ring switching) is prolonged. This indicates that the OFF time of a service transmission signal is undesirably prolonged. In particular, when nodes are installed between countries in the world, the transmission distance reaches about several ten thousand km. This increases the transmission delay time, resulting in a serial situation.

As described above, in the ring switching scheme of the conventional SDH ring network system, when a fault occurs in one of the CW and CCW lines of the service line in the segment in which the CW and CCW lines of the protection line cannot be used, each node adjacent to the faulty segment detects the occurrence of the fault in the opposing node by using the K bytes transmitted outside the faulty segment. The time is required to transmit the K bytes one turn in the network except the faulty segment until the ring switching sequence is started. The OFF time of the service transmission signal is undesirably prolonged.

The present invention has been made in consideration of the above situation, and has as its object to provide a ring network system and transmission apparatus, in which even if a fault occurs in one of the CW and CCW lines of the service line while faults have occurred in both the CW and CCW lines of the protection line, a time required to make all nodes in the network start controlling restoration of a service transmission signal can be shortened, thereby shortening the OFF time of the service transmission signal.

In order to achieve the above object, according to the first aspect of the present invention, there is provided a ring network system comprising:
a plurality of transmission apparatuses; and
a transmission line for connecting the plurality of transmission apparatuses in a ring shape, wherein the transmission line has a service line and protection line, each of the service line and the protection line having a clockwise line and a counterclockwise line,
each of the plurality of transmission apparatuses having
a detection section for detecting a first transmission fault occurring in one of the clockwise and counterclockwise lines of the service line and a second transmission fault occurring in both the clockwise and counterclockwise lines of the protection line,
a first transmitting section for, when the detecting section detects occurrence of the first and second transmission faults, transmitting first information representing occurrence of the first transmission fault to remaining ones of the plurality of transmission apparatuses via a line of the service line except a line subjected to the first transmission fault in a segment in which the first and second transmission faults have occurred,
a second transmitting section for, when the detecting section detects occurrence of the first and second transmission faults, transmitting second information representing occurrence of the first and second transmission faults to the remaining transmission apparatuses via the protection line, and
a control section for controlling ring switching for remedying transmission signals flowing through the service line when the control section receives the first information from the remaining transmission apparatuses and the second information.

According to the present invention, the detecting section detects the first transmission fault occurring in one of the clockwise and counterclockwise lines of the service line and the second transmission fault occurring in both the clockwise and counterclockwise lines of the protection line.

When the detecting section detects occurrence of the first and second transmission faults, the first transmitting section transmits the first information representing occurrence of the first transmission fault to the remaining transmission apparatuses via a line of the service line except a line subjected to the first transmission fault in a segment in which the first and second transmission faults have occurred.

When the detecting section detects occurrence of the first and second transmission faults, the second transmitting section transmits the second information representing the occurrence of the first and second transmission faults to the remaining transmission apparatuses via the protection line. In this case, the second transmission fault has occurred in one of the protection lines between the two adjacent segments, the second information is not transmitted, but the first information is transmitted via the service line. The two adjacent transmission apparatuses can detect occurrence of the first and second transmission faults.

The control section in each remaining transmission apparatus adjacent to the segment subjected to the fault controls ring switching for remedying transmission signals flowing through the service line when the control section receives the first information from the remaining transmission apparatuses and the second information.

According to the present invention, when a fault occurs in the service line, the transmission apparatuses adjacent to the faulty segment can directly exchange information pertaining to the service line fault regardless of the presence/absence of a protection line fault in this faulty segment. That is, in the conventional case, when a protection line fault has occurred, the time is required to transmit the service line fault information one turn in the ring network until the service line fault information is notified to an upstream transmission apparatus. However, in the present invention, a time is required until information is transmitted through one segment (fault occurrence segment).

The time required to start transmission line switching control in the ring network can be greatly shortened. As a result, the OFF time of the service transmission signal can be shortened.

According to the second aspect of the present invention, there is provided a ring network system of the first aspect,
wherein when the second transmitting section receives the first information from the remaining transmission apparatuses and the detecting section detects the second transmission fault, the second transmitting section transmits second information representing occurrence of the first and second transmission faults to adjacent ones of the remaining transmission apparatuses via the protection line.

According to the third aspect of the present invention, there is provided a ring network system of the first aspect,
wherein when the first transmitting section transmits the first information to the remaining transmission apparatuses and the second information is received from the remaining transmission apparatuses, the control section performs ring switching control for remedying transmission signals flowing through the service line.

According to the fourth aspect of the present invention, there is provided a ring network system of the first aspect,
wherein when the second information is received from the adjacent transmission apparatuses, the control section controls ring switching for remedying transmission signals flowing through the service line.

According to the fifth aspect of the present invention, there is provided a ring network system of the first aspect,
wherein the first information contains first type information representing a type of the first transmission fault occurring in the service line, the second information contains second type information representing a type of the second transmission fault occurring in the protection line and a type of the first transmission fault occurring in the service line, and the control section controls ring switching corresponding to the first type information and second type information.

According to the sixth aspect of the present invention, there is provided a ring network system of the first aspect,
wherein the ring switching control by the control section is performed according to a sequence defined in ITU-T Recommendation G. 841 (07/95).

According to the seventh aspect of the present invention, there is provided a ring network system of the first aspect,
wherein the first type information and the second type information contain SF (Signal Fail) information and SD (Signal Degrade) information.

According to the eighth aspect of the present invention, there is provided a ring network system of the first aspect,
wherein the first information and the second information are written in a section overhead of an SDH (Synchronous Digital Hierarchy) frame.

According to the ninth aspect of the present invention, there is provided a ring network system of the first aspect,
wherein the first information and the second information are written in an APS (Auto Protection Switching) byte in a section overhead of an SDH (Synchronous Digital Hierarchy) frame.

According to the 10th aspect of the present invention, there is provided a ring network system of the first aspect,
wherein the first information and the second information are written in a DCC (Data Communication Channel) in a section overhead of an SDH (Synchronous Digital Hierarchy) frame.

According to the 11th aspect of the present invention, there is provided a ring network system of the first aspect,
wherein the first information and the second information are written in empty bits of an SDH (Synchronous Digital Hierarchy) frame.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing a ring network system;
FIG. 2 is a block diagram showing a ring network system according to an embodiment of the present invention;
FIG. 3 is a block diagram showing the arrangement of nodes A to F in FIG. 2;
FIG. 4 is a table showing the contents described in a fault management table 61;
FIG. 5 is a block diagram for explaining the fault detection mechanism of the nodes C and D of this embodiment;
FIG. 6A is a table showing the state of the fault management table 61 in the node C in a state wherein an SF fault has occurred in a bidirectional protection line PL of the segment C in FIG. 5;
FIG. 6B is a table showing the state of the fault management table 61 in the node D in a state wherein an SF fault has occurred in a bidirectional protection line PL of the segment C in FIG. 5;
FIG. 7A is a table showing the state of the fault management table 61 in the node C in a state wherein an SF fault has occurred in a bidirectional protection line PL and CCW line of a service line SL of the segment C in FIG. 5;
FIG. 7B is a table showing the state of the fault management table 61 in the node D in a state wherein an SF fault has occurred in a bidirectional protection line PL and CCW line of a service line SL of the segment C in FIG. 5;
FIG. 8 is a view for explaining a ring switching sequence in the embodiment of the present invention; and
FIG. 9 is a view showing K-byte information format defined in ITU-T Recommendation G. 841.

The preferred embodiment of the present invention will be described with reference to the accompanying drawing.

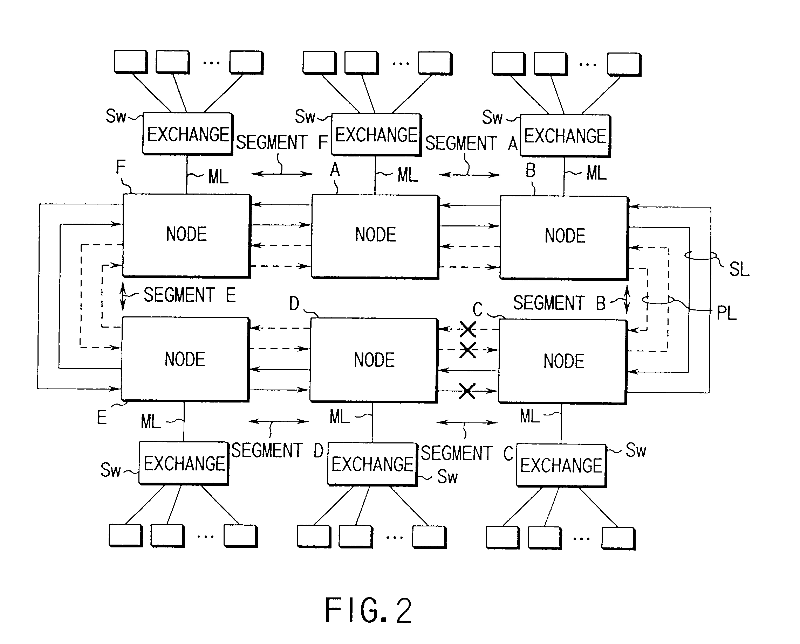

FIG. 2 shows a ring network system according to the embodiment of the present invention. This ring network system has almost the same arrangement as that in FIG. 1. However, each node has an arrangement different from that in FIG. 1 (the nodes in FIG. 2 are denoted by reference symbols A to F so as to distinguish them from the nodes in FIG. 1).

For a detailed description, FIG. 2 illustrates an exchange Sw. Referring to FIG. 2, intervals A and B, B and C, C and D, D and E, E and F, and F and A are defined as segments A, B, C, D, E, and F, respectively.

More specifically, referring to FIG. 2, the nodes A to F extract arbitrary information of the information transmitted via a service line SL and protection line PL. The nodes A to F drop the extracted information in lower communication apparatuses such as the exchanges Sw via a low-speed line ML. The nodes A to F add information from the respective exchanges Sw to the service line SL or protection line PL. Each exchange is further connected to equipment (not shown) such as a lower subscriber exchange.

The service and protection lines SL and PL are multiplex lines such as STM-16 standardized in the SDH. Signals transmitted via communication paths set between the nodes A to F are time-divisionally multiplexed.

For example, the node A receives a high-speed time-divisional multiplexed signal transmitted from another node via the node F serving as the adjacent node. The node A separates (drops) the self-node channel from the service line SL (protection line PL) and outputs it to the low-speed line ML. The node A adds a signal transmitted from the self-node low-speed line ML to a time-divisional multiplexed signal of another channel that is not the self-node channel and outputs the high-speed time-divisional multiplexed signal to the node B as the adjacent node. Similarly, a high-speed time-divisional multiplexed signal transmitted from the node B and serving as a transmission signal in the reverse direction is multiplexed/separated (added/dropped). The resultant signal is output to the node F.

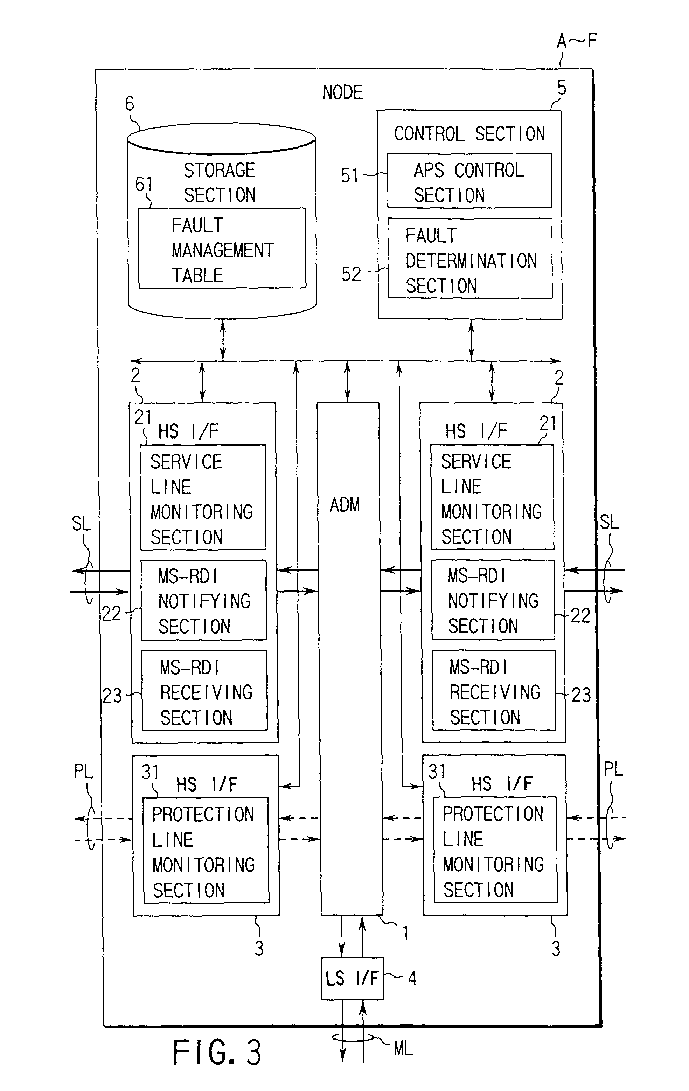

FIG. 3 shows the main arrangement of each of the nodes A to F.

As shown in FIG. 3, each of the nodes A to F has an ADM (Add Drop Multiplexer) 1. The ADM 1 receives through a high-speed service interface (HS I/F) 2 and a high-protection interface (HS I/F) 3 synchronous transmission data transmitted via the service line SL and protection line PL.

The ADM 1 drops the input synchronous transmission data to the low-speed line ML side via a low-speed interface (LS I/F) 4. The synchronous transmission data input from the low-speed line ML side is input to the ADM 1 via the LS I/F 4. The input synchronous transmission data is multiplexed on the service line SL (protection line PL).

A control section 5 controls the operation of the ADM 1 on the basis of information supplied from the high-speed interfaces (HS I/Fs) 2 and 3. Note that programs and data used in the control section 5 are stored in a storage section 6.

The service interface 2 comprises a service line monitoring section 21, MS-RDI (Multiplex Section-Remote Defect Indicator) notifying section 22, and MS-RDI receiving section 23. Among them all, the service line monitoring section 21 monitors transmission signals transmitted from the adjacent node via the service line SL and detects the presence/absence of a fault on the service line SL and the type of fault. This detection information is supplied to the MS-RDI notifying section 22 and control section 5.

When the service line monitoring section 21 detects that an SF-S fault has occurred on the service line SL, the MS-RDI notifying section 22 notifies a source node (upstream node) of the service transmission signal of occurrence of the SF-S fault via the reverse, remaining service line SL. More specifically, the lower 3 bits of the K2 byte in the SOH (Section OverHead) of the SDH transmission frame are rewritten into "110" (complying with ITU-T Recommendation G. 841), and the written K2 byte is sent to the upstream node.

The MS-RDI receiving section 23 extracts the K2 byte (or at least its lower 3 bits) of the transmission signal transmitted from the adjacent node via the service line SL to determine whether the MS-RDI information is written in the K2 byte.

If the MS-RDI information is written ("110"), the MS-RDI receiving section 23 detects that the SF-S fault has occurred in the service line SL in the section with the adjacent node. The MS-RDI receiving section 23 then notifies the control section 5 of this.

The protection interface 3 comprises a protection line monitoring section 31 for monitoring a transmission signal transmitted from the adjacent node via the protection line PL and detecting the presence/absence of a fault on the protection line PL and the type of fault.

The control section 5 is implemented by, e.g., a microcomputer and comprises an APS control section 51 and fault determination section 52. When a fault occurs in the ring network system, the APS control section 51 exchanges K bytes in accordance with the sequence defined in ITU-T Recommendation G. 841 and performs service/protection line switching, i.e., a so-called APS function.

The fault determination section 52 receives information notified from another node using the K bytes, information detected by the service line monitoring section 21 and protection line monitoring section 31, and information acquired by the MS-RDI receiving section 23 and looks up a fault management table 61 (to be described later) on the basis of these pieces of information. The fault determination section 52 then determines the form of the fault and notifies the APS control section 51 of this determination result. If necessary, the fault determination section 52 makes the APS function switching between the service and protection lines. In particular, assume that SF-P faults have occurred in the CW and CCW lines of the protection line PL in a segment with the adjacent node. In this case, when a notification (from the MS-RDI receiving section 23) representing occurrence of the SF-S fault on the service line SL in this segment is received, an instruction representing ring switching pertaining to the corresponding segment is notified to the APS control section 51.

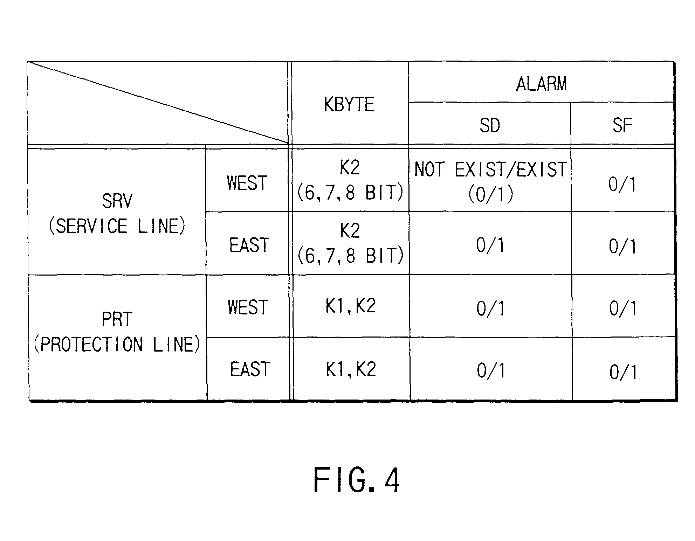

The storage section 6 stores the fault management table 61 in addition to the programs and various data pertaining to information communication with another node, control of operation of the ADM 1, and APS control. As shown in FIG. 4, the fault management table 61 makes K-byte information (KBYTE) and the presence/absence of an SD or SF fault alarm (ALARM) correspond to each other about the receiving service line (SRV) and receiving protection line (PRT) in segments with adjacent nodes located on the EAST and WEST sides. In particular, the K-byte information of the receiving service line (SRV) is acquired by the MS-RDI receiving section 23, and the K2 byte or at least its lower 3 bits are described. The information described in the fault management table 61 is updated in real time.

The APS control section 51, fault determination section 52, service line monitoring section 21, MS-RDI notifying section 22, MS-RDI receiving section 23, and protection line monitoring section 31 are implemented as a hardware logic using a program (software) describing the processing sequences of, e.g., a CPU (Central Processing Unit).

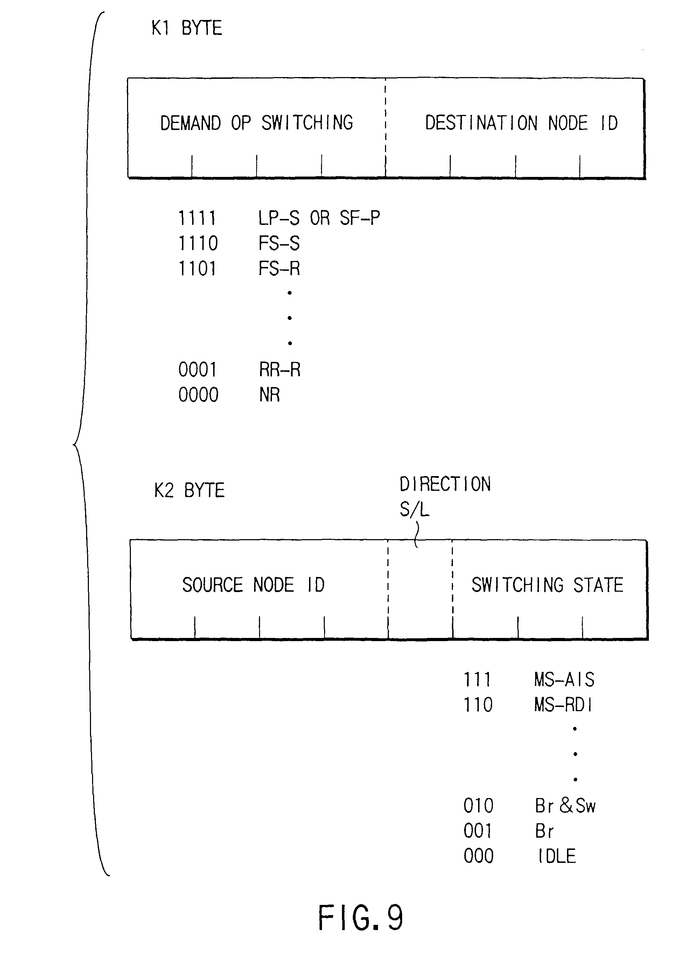

Prior to the following description, the K-byte information formats defined in ITU-T Recommendation G. 841 will be described with reference to FIG. 9. As shown in FIG. 9, in the K1 byte, a demand of switching to another node is defined in the 1st to 4th bits; and the ID of the destination node demanding switching, in the 5th to 8th bits. The demand of switching represents 16 states such as LP-S (Lockout of Protection-Service) or SF-P (Signal Fail-Protection) {bit pattern: 1111}, FS-S (Forced Switch-Span){bit pattern: 1110}, and FS-R (Forced Switch-Ring){bit pattern: 1101}. The priority of these 16 states is given in descending order downward.

In the K2 byte, the ID of the source node that represents the transmission node of the K2 byte is defined in the 1st to 4th bits; the direction (Short is the direction for direct transmission in the switching segment; this direction will be referred to as a Short direction hereinafter whereas Long is the direction for transmission by bypassing the switching segment; this direction will be referred to as a Long direction hereinafter) for the switching segment (faulty segment), in the 5th bit; and the switching states of the source node, in the 6th to 8th bits. There are eight switching states (three are undefined) such as MS-AIS (MS-Alarm Indication Signal){bit pattern: 111} and MS-RDI {bit pattern: 110}.

A switching state Br (Bride) is a state in which the transmitting side is connected to both the service and protection sides. A switching state Sw (Switch) is a state in which the receiving side is switched from the service side to the protection side. A switching state Idle is a state in which Bridge control and Switch control are not performed.

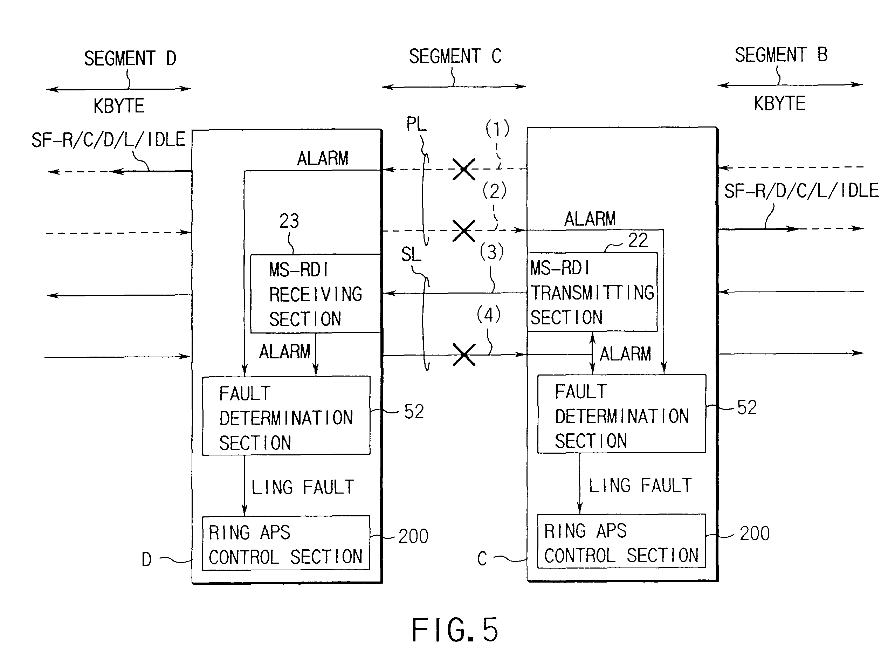

The operation of the above arrangement will be described below. FIG. 5 is a view for explaining the fault detection mechanism of the nodes C and D of this embodiment. Although the ring APS control section 200 in FIG. 5 is not illustrated in FIG. 3, it is implemented as part of the functional object of the APS control section 51.

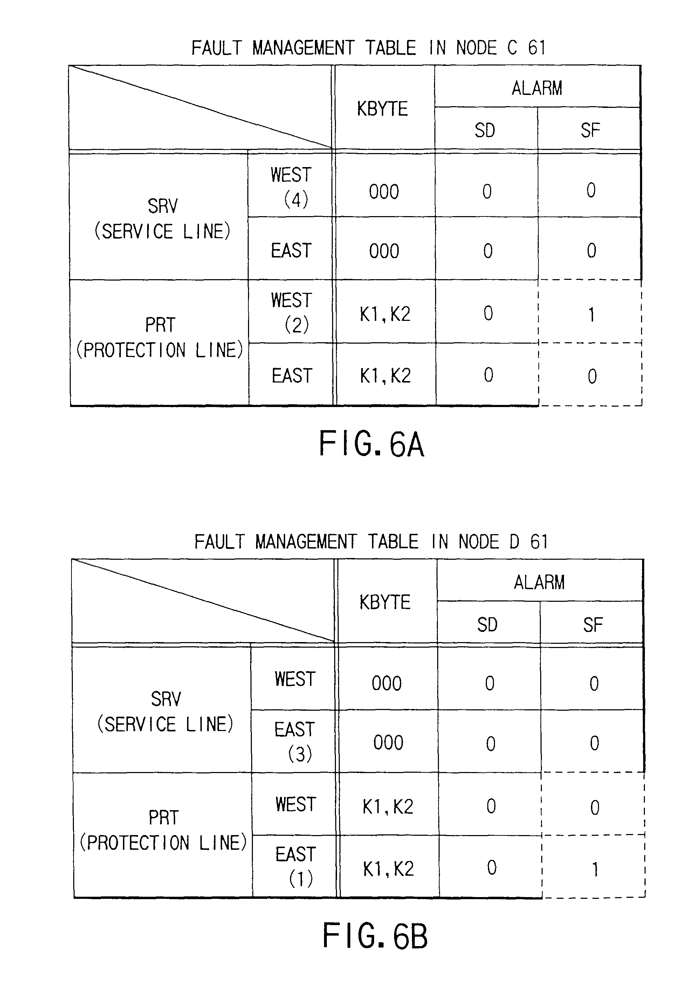

Assume that an SF fault (Signal Fail: signal reception fault) has occurred in the bidirectional protection line PL ((1) and (2) in FIG. 3) of a segment (segment C) between the nodes C and D. In this state, the contents of the fault management table in the node C are shown in FIG. 6A, while the contents of the fault management table in the node D are shown in FIG. 6B.

The SD of the fault (ALARM) represents "Signal Degrade" (signal is not OFF state; this fault is referred to as an SD fault hereinafter). The SF represents "Signal Fail" (the signal is OFF, but degrades; this fault is referred to as an SF fault hereinafter).

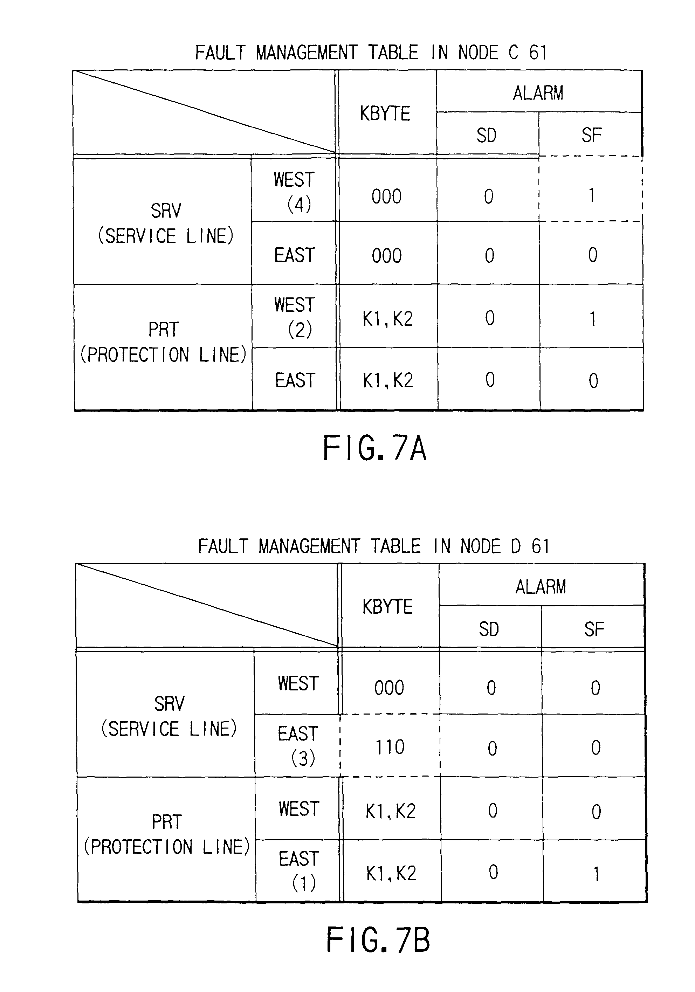

Assume that an SF fault occurs in the CCW line of the service line SL ((4) in FIG. 3) in the same segment in the above state. In this case, the service line monitoring section 21 in the node C detects occurrence of the SF fault and notifies the fault determination section 52 of this. The fault determination section 52 determines occurrence of the ring fault. The APS control section 51 (ring APS control section 200) outputs the K bytes (SF-R/D/C/L/IDLE) for demanding ring switching on the basis of the above notification. At this time, the contents of the fault management table 61 in the node C are shown in FIG. 7A.

The MS-RDI notifying section 22 in the node C notifies the node D via the service line SL (3) of information representing occurrence of the SF fault in the service line SL (4).

The MS-RDI receiving section 23 in the node D detects occurrence of the SF fault in the service line SL (4) and notifies the fault determination section 52 of this. The fault determination section 52 determines occurrence of the ring fault. The APS control section 51 (ring APS control section 200) outputs the K bytes (SF-R/C/D/L/IDLE) representing the demand of ring switching on the basis of the above notification. At this time, the contents of the fault management table 61 in the node C are shown in FIG. 7B.

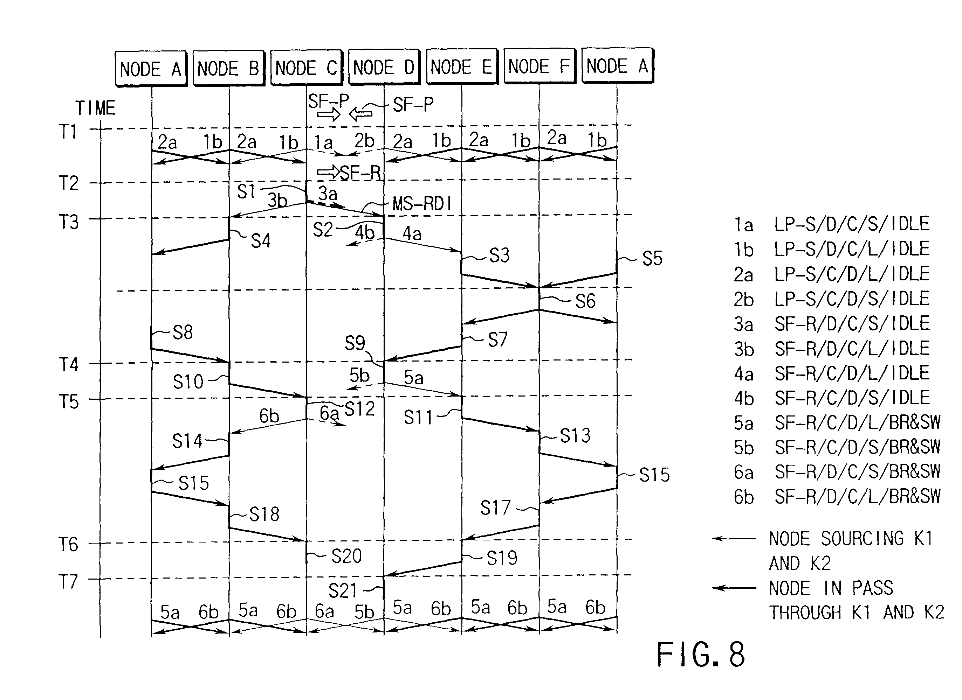

As described above, the K bytes pertaining to ring switching are output from the nodes C and D, and the ring switching sequence is started. This ring switching sequence will be described with reference to FIG. 8.

At time (TIME) T1 in FIG. 8, assume that SF (SF-P) faults (these faults need not simultaneously occur) have occurred in the bidirectional protection line PL between the nodes C and D (segment C) in a state (normal state) in which no line switching is performed (see FIG. 3). In this state, the K bytes (1a and 2b) output from the nodes C and D via the protection line PL of the segment C do not reach the nodes D and C, respectively (1b and 2a reach via a segment except the segment C). Therefore, the nodes C and D detect occurrence of a fault in the protection line PL of the segment C.

In this state, at time T2, assume that an SF fault has occurred in the service line SL connected from the node D to the node C. The node C receives a notification representing occurrence of an SF-R (Signal Fail-Ring). The node C outputs K bytes 3a and 3b representing the demand of ring switching (step S1 in FIG. 8). Of these K bytes, the K byte 3b output in the Long direction is sequentially received by the node B (step S4), node A (step S5), node F (step S6), and node E (step S7) via the protection line PL and reaches the node D at time T4 (step S9). In steps S1 to S5, part-time traffic transmitted via the protection line PL is drop-controlled.

In step S1, the K byte 3a output in the Short direction does not reach the node D because no fault has occurred in the protection line PL of the segment C. In step S1, the MS-RDI notifying section 22 of the node C transmits an MS-RDI signal (K-byte signal in which 6th to 8th bits of the K2 byte are set to "110") to the node D via the service line SL of the segment C.
Therefore, occurrence of the SF-R fault is detected in the node D, and K bytes 4a and 4b representing the demand of ring switching are output (step S2).

Of these K bytes, the K byte 4a transmitted in the Long direction is sequentially received by the node E (step S3), node F (step S6), node A (step S8), and node B (step S10) via the protection line PL and reaches the node C at time T5 (step S12). At this time, the nodes F, E, A, and B that have received the K bytes in both the directions execute bridge and switch control (Br & Sw) in steps S6, S7, S8, and S10, respectively, thereby controlling ring switching.

The node D that has received the K byte 3b in step S9 outputs K bytes 5a and 5b. Of these K bytes, the K byte 5a output in the Long direction is sequentially passed through the nodes E, F, A, and B (steps S11, S13, S15, and S18) and received by the node C (step S20). The node C that has received the K byte 4a in step S12 outputs K bytes 6a and 6b. Of these K bytes, the K byte 6b output in the Long direction is sequentially passed through the nodes B, A, F, and E (steps S14, S15, S17, and S19) and received by the node D (step S21). The ring switching sequence is thus completed, and restoration control for the service traffic is completed accordingly.

In this embodiment, the MS-RDI receiving sections 23 are arranged in the nodes A to F, respectively. When an SF fault occurs in the service line SL (4) in a state in which the faults have occurred in the protection line PL (1, 2) in a segment (segment C) between, e.g., the nodes C and D, the node C that has detected occurrence of the SF faults directly notifies the opposing node D of occurrence of the faults using the MS-RDI signal. This MS-RDI signal is transmitted from the MS-RDI notifying section 22 via the remaining service line SL (3). The MS-RDI receiving section 23 of the node D receives this MS-RDI signal to detect occurrence of ring switching.

In this embodiment, when a fault occurs in one of the CW and CCW lines of the service line SL in a segment in which the faults have occurred in the CW and CCW lines of the protection line PL, the time required to notify the fault occurrence message from the fault detection node to the opposing node can be greatly shortened. As a result, the time required to start line switching control can be greatly shortened. The OFF time of the service transmission signal can be shortened accordingly.

The present invention is not limited to the particular embodiment described above. The ring network and transmission apparatus complying with the SDH standard are exemplified. The present invention is also applicable to SONET having a similar transmission signal frame.

In the above embodiment, occurrence of an SF-R fault is notified by exchanging the MS-RDI signal via the service line SL. However, the present invention is not limited. The fault occurrence notification may be sent via a protection channel of the SOH of the SDH frame. In this case, for example, a DCC can be used.

The fault management table 61 manages only information for the receiving line. However, the fault management table 61 may store information for a transmitting line.

As has been described above, according to the present invention, when a fault occurs in a service line, this fault is detected by a fault detecting section in a downstream transmission apparatus. The fault notifying section in this downstream transmission apparatus notifies the adjacent upstream transmission apparatus of information about this fault via a reverse service line.

The extracting section of the upstream transmission apparatus extracts information about the service line fault from the service transmission signal and sends this information to the fault determination section. The fault determination section receives this extracted information, information notified from the remaining transmitting apparatuses using the above control information, and information detected by the fault detecting section. The fault determination section determines the current fault occurrence form on the basis of these pieces of information and the contents of the fault management table. The fault determination section then notifies the transmission signal remedy control section of the determination result.

Upon receiving this notification, the transmission signal remedy control section writes necessary information in the control information and sends the resultant information to the ring network system. Each transmission apparatus in the ring network system reads this control information and performs line switching control under the control of the transmission signal remedy control section.

When a fault occurs in one of the CW and CCW lines of the service line in a segment in which the faults have occurred in the CW and CCW lines of the protection line, the time required to allow all the nodes in the network to start control for restoring the service transmission signal can be shortened. Therefore, there can be provided a ring network system and transmission apparatus in which the OFF time of the service transmission signal can be shorted.

## Claims

1. A ring network system characterized by comprising:
a plurality of transmission apparatuses; and
a transmission line for connecting said plurality of transmission apparatuses in a ring shape, wherein said transmission line has a service line and protection line, said service line and said protection line respectively having a clockwise line and a counterclockwise line,
each of said plurality of transmission apparatuses having
a detection section (21, 31) for detecting a first transmission fault occurring in one of said clockwise and counterclockwise lines of said service line and a second transmission fault occurring in both said clockwise and counterclockwise lines of said protection line,
a first transmitting section (22) for, when said detecting section detects occurrence of the first and second transmission faults, transmitting first information representing occurrence of the first transmission fault to remaining ones of said plurality of transmission apparatuses via a line of said service line except a line subjected to the first transmission fault in a segment in which the first and second transmission faults have occurred,
a second transmitting section (1, 3) for, when said detecting section detects occurrence of the first and second transmission faults, transmitting second information representing occurrence of the first and second transmission faults to said remaining transmission apparatuses via said protection line, and
a control section (5) for controlling ring switching for remedying transmission signals flowing through said service line when said control section receives the first information from said remaining transmission apparatuses and the second information.

2. A ring network system according to claim 1,
characterized in that when said second transmitting section receives the first information from said remaining transmission apparatuses and said detecting section detects the second transmission fault, said second transmitting section transmits second information representing occurrence of the first and second transmission faults to adjacent ones of said remaining transmission apparatuses via said protection line.

3. A ring network system according to claim 1,
characterized in that when said first transmitting section transmits the first information to said remaining transmission apparatuses and the second information is received from said remaining transmission apparatuses, said control section performs ring switching control for remedying transmission signals flowing through said service line.

4. A ring network system according to claim 1,
characterized in that when the second information is received from said adjacent transmission apparatuses, said control section controls ring switching for remedying transmission signals flowing through said service line.

5. A ring network system according to claim 1,
characterized in that the first information contains first type information representing a type of the first transmission fault occurring in said service line, the second information contains second type information representing a type of the second transmission fault occurring in said protection line and a type of the first transmission fault occurring in said service line, and said control section controls ring switching corresponding to the first type information and second type information.

6. A ring network system according to claim 1,
characterized in that the ring switching control by said control section is performed according to a sequence defined in ITU-T Recommendation G. 841 (07/95).

7. A ring network system according to claim 1,
characterized in that the first type information and the second type information contain SF (Signal Fail) information and SD (Signal Degrade) information.

8. A ring network system according to claim 1,
characterized in that the first information and the second information are written in a section overhead of an SDH (Synchronous Digital Hierarchy) frame.

9. A ring network system according to claim 1,
characterized in that the first information and the second information are written in an APS (Auto Protection Switching) byte in a section overhead of an SDH (Synchronous Digital Hierarchy) frame.

10. A ring network system according to claim 1,
characterized in that the first information and the second information are written in a DCC (Data Communication Channel) in a section overhead of an SDH (Synchronous Digital Hierarchy) frame.

11. A transmission apparatus connected to remaining transmission apparatuses via a transmission line in a ring shape, wherein said transmission line has a service line and protection line, each of said service line and said protection line having a clockwise line and a counterclockwise line, comprising:
a detection section (21, 31) for detecting a first transmission fault occurring in one of said clockwise and counterclockwise lines of said service line and a second transmission fault occurring in both said clockwise and counterclockwise lines of said protection line;
a first transmitting section (22) for, when said detecting section detects occurrence of the first and second transmission faults, transmitting first information representing occurrence of the first transmission fault to remaining ones of said plurality of transmission apparatuses via a line of said service line except a line subjected to the first transmission fault in a segment in which the first and second transmission faults have occurred;
a second transmitting section (1, 3) for, when said detecting section detects occurrence of the first and second transmission faults, transmitting second information representing occurrence of the first and second transmission faults to said remaining transmission apparatuses via said protection line; and
a control section (5) for controlling ring switching for remedying transmission signals flowing through said service line when said control section receives the first information from said remaining transmission apparatuses and the second information.

12. A transmission apparatus according to claim 11,
characterized in that when said second transmitting section receives the first information from said remaining transmission apparatuses and said detecting section detects the second transmission fault, said second transmitting section transmits second information representing occurrence of the first and second transmission faults to adjacent ones of said remaining transmission apparatuses via said protection line.

13. A transmission apparatus according to claim 11,
characterized in that when said first transmitting section transmits the first information to said remaining transmission apparatuses and the second information is received from said remaining transmission apparatuses, said control section performs ring switching control for remedying transmission signals flowing through said service line.

14. A transmission apparatus according to claim 11, characterized in that when the second information is received from said adjacent transmission apparatuses, said control section controls ring switching for remedying transmission signals flowing through said service line.

15. A transmission apparatus according to claim 11,
characterized in that the first information contains first type information representing a type of the first transmission fault occurring in said service line, the second information contains second type information representing a type of the second transmission fault occurring in said protection line and a type of the first transmission fault occurring in said service line, and said control section controls ring switching corresponding to the first type information and second type information.

16. A transmission apparatus according to claim 11,
characterized in that the ring switching control by said control section is performed according to a sequence defined in ITU-T Recommendation G. 841 (07/95).

17. A transmission apparatus according to claim 11,
characterized in that the first type information and the second type information contain SF (Signal Fail) information and SD (Signal Degrade) information .

18. A transmission apparatus according to claim 11,
characterized in that the first information and the second information are written in a section overhead of an SDH (Synchronous Digital Hierarchy) frame.

19. A transmission apparatus according to claim 11,
characterized in that the first information and the second information are written in an APS (Auto Protection Switching) byte in a section overhead of an SDH (Synchronous Digital Hierarchy) frame.

20. A transmission apparatus according to claim 11, characterized in that the first information and the second information are written in a DCC (Data Communication Channel) in a section overhead of an SDH (Synchronous Digital Hierarchy) frame.

21. A transmission apparatus according to claim 11, characterized in that the first information and the second information are written in empty bits of an SDH (Synchronous Digital Hierarchy) frame.
